(19) Europäisches Patentamt
European Patent Office
Office européen des brevets

(11) **EP 1 560 737 B1**

(12) **EUROPÄISCHE PATENTSCHRIFT**

(45) Veröffentlichungstag und Bekanntmachung des Hinweises auf die Patenterteilung:
**25.08.2010 Patentblatt 2010/34**

(21) Anmeldenummer: 03787309.8

(22) Anmeldetag: **20.06.2003**

(51) Int Cl.:
***B60T 7/12*** *(2006.01)*

(86) Internationale Anmeldenummer:
**PCT/DE2003/002059**

(87) Internationale Veröffentlichungsnummer:
**WO 2004/039646 (13.05.2004 Gazette 2004/20)**

(54) **VERFAHREN UND VORRICHTUNG ZUR STEUERUNG DER BREMSANLAGE EINES KRAFTFAHRZEUGS**

METHOD AND DEVICE FOR CONTROLLING THE BRAKE SYSTEM OF A MOTOR VEHICLE

PROCEDE ET DISPOSITIF POUR REGULER LE SYSTEME DE FREINAGE D'UNE AUTOMOBILE

(84) Benannte Vertragsstaaten:
**DE FR GB**

(30) Priorität: **31.10.2002 DE 10250719**

(43) Veröffentlichungstag der Anmeldung:
**10.08.2005 Patentblatt 2005/32**

(73) Patentinhaber: **ROBERT BOSCH GMBH**
**70442 Stuttgart (DE)**

(72) Erfinder: **SCHMIDT, Mario**
**71696 Moeglingen (DE)**

(56) Entgegenhaltungen:
**EP-A- 1 327 566      WO-A-01/58714**
**DE-A- 19 925 249     US-B1- 6 439 675**

- **PATENT ABSTRACTS OF JAPAN vol. 008, no. 274 (M-345), 14. Dezember 1984 (1984-12-14) & JP 59 143747 A (MAZDA KK), 17. August 1984 (1984-08-17)**

**Beschreibung**

Stand der Technik

Die Erfindung geht aus von einem Verfahren und einer Vorrichtung zur Steuerung einer Bremsanlage aus.

Aus der DE 199 50 034 A1 sind ein Verfahren und eine Vorrichtung zur Steuerung einer Bremsanlage eines Kraftfahrzeugs bekannt, wobei in wenigstens einem Betriebszustand bei betätigtem Bremspedal Bremskraft an wenigstens einem Rad eines Fahrzeugs unabhängig vom Maß der Pedalbetätigung gehalten wird. Dabei sind für die Aktivierung oder Deaktivierung der Funktion verschiedene Bedingungen gemeinsam oder alternativ vorgesehen.

Die Merkmale der Oberbegriffe der unabhängigen Ansprüche sind der DE 199 50 034 A1 und der JP 59 143 474 entnommen.

Vorteile der Erfindung

Die Erfindung betrifft ein Verfahren zur Steuerung der Bremsanlage eines Kraftfahrzeugs,
- bei dem zur Verhinderung des Wegrollens des Fahrzeugs nach einem Haltevorgang ein erster Bremskraftwert an wenigstens einem Rad des Fahrzeugs fahrerunabhängig

eingestellt und während einer vorgegebenen, begrenzten Haltezeit gehalten wird. Diese Verfahren sind auch unter den Bezeichnungen "hillholder" oder "HHC" (= "Hill Hold Control") bekannt.

Der vorteilhafte Kern der Erfindung besteht darin, dass

- der Neigungswinkel der Fahrbahn in Fahrzeuglängsrichtung ermittelt wird und
- dass die Haltezeit abhängig vom ermittelten Neigungswinkel ist, bei Erfassung eines Anfahrwunsches (z.B. durch Gaspedalbetätigung, wobei jedoch noch nicht genug Motormoment für den Anfahrvorgang gegeben werden muss) durch den Fahrer während der vorgegebenen Haltezeit
- die vorgegebene Haltezeit vorzeitig abgebrochen wird und
- ein zweiter Bremskraftwert fahrerunabhängig ab diesem Zeitpunkt während (d.h. für die Dauer) einer vorgegebenen erweiterten Haltezeit aufrechterhalten wird.

Insbesondere bei einem bergaufwärts gerichteten Anfahrvorgang wird dadurch dem Fahrer vorteilhafterweise mehr Zeit für den Anfahrvorgang gegeben.

Durch die Verwendung von zwei Zeitintervallen (Haltezeit und erweiterte Haltezeit) ist es möglich, die bei einem Anfahrvorgang am Berg notwendigen Schritte

1. Wechsel vom Bremspedal auf das Fahrpedal und
2. Aufbringung des notwendigen Motormoments mit dem Fahrpedal,

zu entkoppeln und jedem dieser beiden notwendigen Schritte vorteilhafterweise ein eigenes Zeitintervall zur Verfügung zu stellen.

Eine vorteilhafte Ausprägung davon ist dadurch gekennzeichnet, dass die erweiterte Haltezeit bzw. die Dauer der erweiterten Haltezeit abhängig vom ermittelten Neigungswinkel ist. Damit ist es möglich, die dem Fahrer für die Aufbringung des für den Anfahrvorgang notwendigen Motormoments zur Verfügung stehende Zeit insbesondere bei Anfahrvorgängen an stark aufwärts geneigten Fahrbahnen zu verlängern.

Eine vorteilhafte Ausgestaltung ist dadurch gekennzeichnet,

- dass die erweiterte Haltezeit bzw. die Dauer der erweiterten Haltezeit dann ihren Maximalwert annimmt, wenn der Neigungswinkel einen vorgegebenen positiven Grenzwert überschreitet.

Der Vorteil besteht darin, dass dadurch bei sehr steil geneigten Fahrbahnen die maximale Haltezeit der Bremskraft für den Anfahrvorgang zur Verfügung steht.

Eine vorteilhafte Ausgestaltung ist dadurch gekennzeichnet, dass der Anfahrwunsch des Fahrers durch die Betätigung des Fahrpedals erfasst wird. Diese Ausgestaltung ist ohne Zusatzaufwand möglich, da der Zustand bzw. die Stellung des Fahrpedals eine dem Motorsteuergerät bekannte Größe ist.

Eine vorteilhafte Ausgestaltung ist dadurch gekennzeichnet, dass die Haltezeit eine kontinuierliche Funktion des Neigungswinkels ist.

Eine ebenfalls vorteilhafte Ausgestaltung ist dadurch gekennzeichnet, dass die erweiterte Haltezeit eine kontinuierliche Funktion des Neigungswinkels ist.

Eine vorteilhafte Ausführungsform ist dadurch gekennzeichnet, dass unter der Vereinbarung, dass der Neigungswinkel bei einem bergabwärts weisenden Anfahrvorgang ein negatives Vorzeichen hat und der Neigungswinkel bei einem bergaufwärts weisenden Anfahrvorgang ein positives Vorzeichen hat, die Haltezeit mit wachsendem Neigungswinkel entweder konstant bleibt oder anwächst.

Eine ebenfalls vorteilhafte Ausführungsform ist dadurch gekennzeichnet, dass unter der Vereinbarung, dass der Neigungswinkel bei einem bergabwärts weisenden Anfahrvorgang ein negatives Vorzeichen hat und der Neigungswinkel bei einem bergaufwärts weisenden Anfahrvorgang ein positives Vorzeichen hat, die erweiterte Haltezeit mit wachsendem Neigungswinkel entweder konstant bleibt oder anwächst.

Eine vorteilhafte Ausführungsform ist dadurch gekennzeichnet, dass der erste Bremskraftwert und der zweite Bremskraftwert gleich sind. Diese Ausführungsform ist besonders einfach in einem Steuergerät zu implementieren.

Die Erfindung betrifft ebenfalls eine Vorrichtung zur Steuerung der Bremsanlage eines Kraftfahrzeugs, mit den Merkmalen des Anspruchs 10.

Weitere vorteilhafte Ausprägungen der Erfindung sind den Unteransprüchen zu entnehmen.

Zeichnung

Ein Ausführungsbeispiel der Erfindung ist in den Zeichnungen 1 bis 6 dargestellt.

Fig. 1 zeigt in Form eines Diagrammes die Grundgedanken der Erfindung.

Fig. 2 zeigt den Ablauf des erfindungsgemäßen Verfahrens.

Fig. 3 zeigt den Aufbau der erfindungsgemäßen Vorrichtung.

Fig. 4 zeigt die Vorzeichen des Neigungswinkels in anschaulicher Art und Weise bei einem Anfahrvorgang in Fahrzeugvorwärtsrichtung.

Fig.5 zeigt die Vorzeichen des Neigungswinkels in anschaulicher Art und Weise bei einem Anfahrvorgang in Fahrzeugrüchwärtsrichtung.

Fig. 6 zeigt die Definition des Neigungswinkels in %.

Ausführungsbeispiele

Hill-Hold-Control (auch als HHC oder als "Hillholder" bezeichnet) ist ein System, welches den Fahrer beim Anfahren von der Bedienung der Feststellbremse (z.B. Handbremse) befreit. HHC verhindert durch Aufrechterhaltung ("Einsperren") des vom Fahrer aufgebrachten Bremsdrucks das Zurückrollen des Fahrzeugs beim Lösen des Bremspedals bis zum eigentlichen Anfahren. Der Bremsdruck ist für die Dauer einer festen oder variablen Haltezeit vom HHC-System eingesperrt bzw. wird vom HHC-System aufgebaut.

Bei einer Ausführungsform des Systems ohne Sensor zur Messung der Steigung bzw. Rechenmitteln zur Berechnung der Steigung kann man nicht sicher unterscheiden, ob das Fahrzeug bergauf oder bergab steht. Das System aktiviert somit gleichermaßen in der Ebene, bergauf und bergab. Dies wirkt sich nachteilig aus, wenn der Fahrer das Fahrzeug bergab rollen lassen will, insbesondere wenn er bergab einparken will. Dann kann es bei jedem Stillstand zu einer wiederholten HHC-Aktivierung kommen.

Die Längssteigung der Fahrbahn kann aus dem Motormoment, dem Bremsmoment und der Fahrzeugverzögerung bzw. -beschleunigung bestimmt werden. Sind diese Größen bekannt, dann kann damit über die Newtonsche Bewegungsgleichung auf die Fahrbahnneigung geschlossen werden (da neben der Bremskraft auch eine vom Neigungswinkel abhängige Komponente der Gewichtskraft entgegen der Bewegungsrichtung wirkt). Alternativ kann die Steigung auch mit einem Längsbeschleunigungssensor ermittelt werden.

Es ist möglich, ein HHC-System mit zwei unterschiedlichen Haltezeiten zu betreiben, nämlich der Haltezeit T0 sowie einer erweiterten Haltezeit T1. Die Haltezeit ist dabei die Zeitspanne vom Freigeben des Bremspedals (beispielsweise über den Status des Bremslichtschalters erkennbar) bis zum Deaktivieren von HHC, sofern der Fahrer nicht anfahren will, d.h. der Fahrer betätigt nicht das Fahrpedal. Betätigt der Fahrer jedoch innerhalb der Haltezeit das Fahrpedal, dann hat er nach Betätigung des Fahrpedals eine weitere Zeitspanne zur Verfügung, um genügend Motormoment für den Anfahrvorgang aufbringen zu können. Diese zusätzliche Zeitspanne, welche mit dem Betätigen des Fahrpedals beginnt, wird als erweiterte Haltezeit bezeichnet. Anschaulich ist der Begriff der erweiterten Haltezeit auch folgendermaßen klar zu verstehen:

Betätigt der Fahrer während der Haltezeit das Fahrpedal, dann gilt die Haltezeit als abgelaufen und es tritt eine neue Zeitspanne in Kraft, während derer das Fahrzeug durch einen fahrerunabhängigen Bremseneingriff festgehalten wird.

Diese neue Zeitspanne wird als erweiterte Haltezeit bezeichnet.

Zahlenbeispiel:

T0 = 0.8 Sekunden, T1 = 1.5 Sekunden.
Nach der Aktivierung des HHC-Systems (Freigabe des Bremspedals) wird das Fahrzeug maximal 0.8 Sekunden festgehalten, um dem Fahrer das Anfahren zu erleichtern. Nach 0.3 Sekunden betätige der Fahrer das Fahrpedal. Beginnend von diesem Betätigungszeitpunkt des Fahrpedals wird das Fahrzeug nun 1.5 Sekunden festgehalten, um dem Fahrer das Anfahren zu erleichtern.
Die Grundidee der Erfindung besteht darin, die Haltezeit und/der die erweiterte Haltezeit abhängig von der jeweiligen Steigung zu wählen.
Dabei bieten sich dafür drei Maßnahmen an:

Maßnahme 1: Verkürzung der Haltezeit bei negativen Steigungen
Maßnahme 2: Verlängerung der Haltezeit bei positiven Steigungen
Maßnahme 3: Verlängerung der erweiterten Haltezeit bei positiven Steigungen

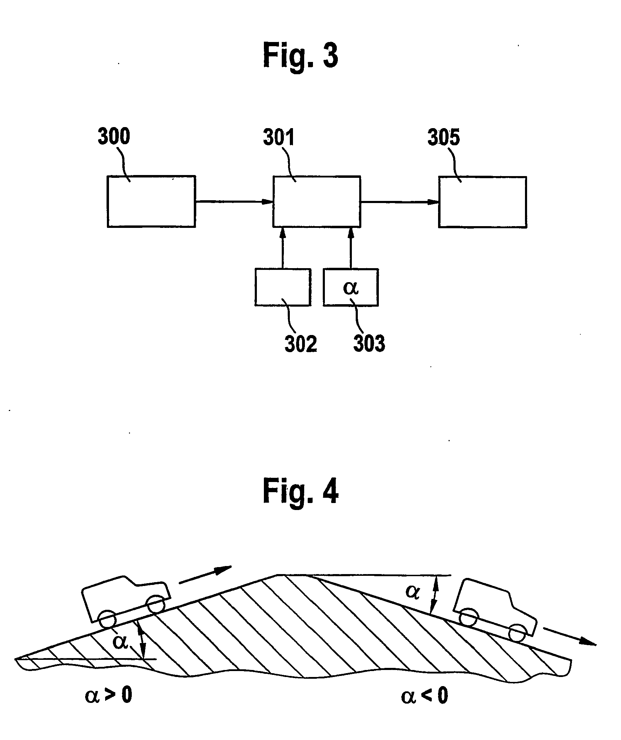

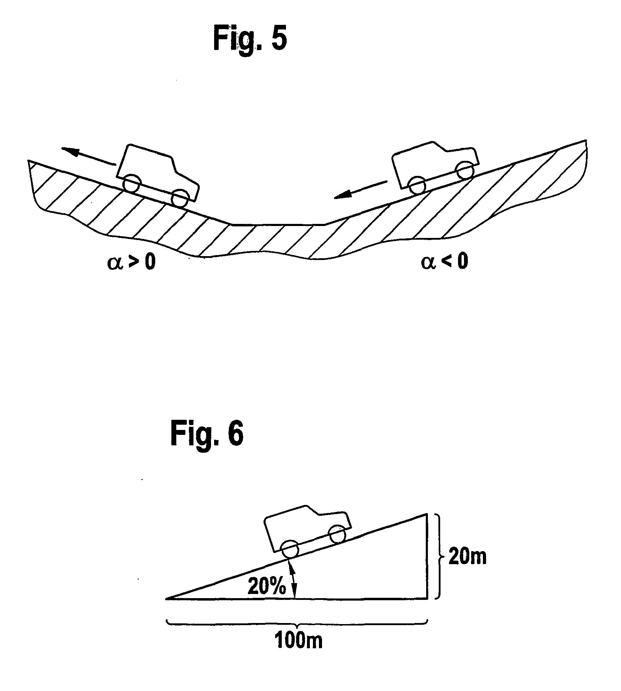

Unter dem Begriff "negative Steigung" wird dabei verstanden, dass die Längsachse des Fahrzeugs abwärts geneigt ist bzw. die Anfahrrichtung des Fahrzeugs weist in die Abwärtsrichtung. Diese Richtung sei durch ein negatives Vorzeichen des Neigungswinkels gekennzeichnet.
Unter dem Begriff "positive Steigung" wird dabei verstanden, dass die Längsachse des Fahrzeugs aufwärts geneigt ist bzw. die Anfahrrichtung des Fahrzeugs weist in die Aufwärtsrichtung. Diese Richtung sei durch ein positives Vorzeichen des Neigungswinkels gekennzeichnet.
Ein positiver Neigungswinkel ist in Fig. 4 auf der linken Seite und ein negativer Neigungswinkel ist in Fig. 4 auf der rechten Seite dargestellt. In Fig. 4 wird jeweils die mit dem Pfeil eingezeichnete Anfahrrichtung betrachtet, d.h. das Fahrzeug fährt in Vorwärtsrichtung an.
Eine Ausdehnung der Idee auf den Fall, dass das Fahrzeug in Rückwärtsrichtung anfährt, ist in Fig. 5 dargestellt. Dabei zeigt der Pfeil ebenfalls in Anfahrrichtung. Zusammenfassend liegt eine positive Steigung dann vor, wenn die Anfahrrichtung des Fahrzeugs aufwärts weist und eine negative Steigung liegt dann vor, wenn die Anfahrrichtung des Fahrzeugs abwärts weist. Ob das Fahrzeug in Vorwärtsrichtung oder Rückwärtsrichtung anfährt, kann beispielsweise durch den eingelegten Gang entschieden werden.
Die drei erwähnten Maßnahmen werden im folgenden diskutiert:

Maßnahme 1: Verkürzte Haltezeit bei negativer Steigung

Die Haltezeit wird bei einer negativen Steigung (d.h. bergab) verringert, so dass das Fahrzeug nur kurze Zeit durch den Hillholder angehalten wird. Dies ist für den Fahrer nicht so störend wie eine längere Haltezeit. Der Fahrer kann so das Fahrzeug leichter bergab rollen lassen.

Maßnahme 2: Verlängerte Haltezeit bei positiver Steigung

Die Haltezeit wird bei einer positiven Steigung (d.h. bergauf) vergrößert, so dass der Fahrer mehr Zeit hat, um vom Bremspedal auf das Fahrpedal zu wechseln. Gerade bei größeren Steigungen ist es besonders wichtig, dass das Fahrzeug nicht zurückrollt. Durch die verlängerte Haltezeit wird das Rückrollen verhindert bzw. die Wahrscheinlichkeit eines Zurückrollens wird reduziert.

Maßnahme 3: Verlängerte erweiterte Haltezeit bei positiver Steigung

Zusätzlich zur Haltezeit wird die erweiterte Haltezeit bei einer größeren positiven Steigung (d.h. bergauf) verlängert.
Dadurch hat der Fahrer mehr Zeit, das notwendige Motormoment aufzubringen. Da bei positiven Steigungen das Lösemoment (d.h. dasjenige minimale Motormoment, welches gerade noch zur Bewegung des Fahrzeugs bergaufwärts führt) proportional zur Steigung ist, ist diese Verlängerung der erweiterten Haltezeit insbesondere bei positiven Steigungen sinnvoll.
Die Steigungswerte, bei denen die Haltezeit oder die erweiterte Haltezeit geändert wird, können frei bestimmt werden, wobei für positive und negative Werte auch unterschiedliche Steigungen verwendet werden können. In der Praxis haben sich Wert von -5% und +5% bewährt.
Die in Prozent angegebenen Steigungswerte sind dabei als Quotient

$$\text{Steigung in \% = (erreichter Höhenunterschied)/(auf Horizontalfläche projizierter Weg-unterschied)*100\%}$$

definiert. Dies ist anschaulich in Fig. 6 dargestellt. Dort führt ein Wert von 100m für die horizontale Projektion der Weglänge zu einem Höhenunterschied von 20m. Folglich beträgt die Steigung 20%.

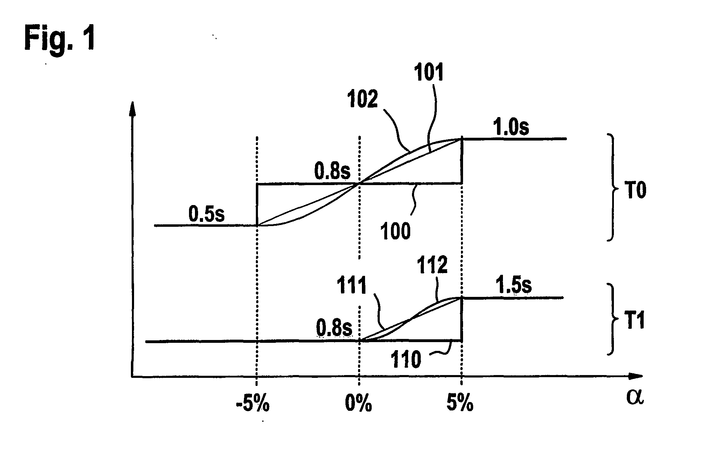

Die Wirkungsweise der vorliegenden Erfindung ist in Fig. 1 dargestellt. Dabei ist in Abszissenrichtung der Neigungswinkel $\alpha$ in Fahrzeuglängsrichtung dargestellt, in Ordinatenrichtung sind verschiedene Zeiten aufgetragen. Die oberen Kurven im Diagramm von Fig. 1 beziehen sich auf die Haltezeit T0, die unteren Kurven beziehen sich auf die erweiterte Haltezeit T1. Wesentlich für die Erfindung ist dabei, dass es sich bei den Haltezeiten T0 und/oder den erweiterten Haltezeiten T1 um vom Neigungswinkel $\alpha$ der Fahrbahn abhängige Zeiten handelt.

Als Beispiel sind in Fig. 1 drei unterschiedliche Abhängigkeiten 100, 101 und 102 der Haltezeit T0 als Funktion des Neigungswinkels aufgetragen. Allen drei Verläufen ist gemeinsam, dass für

- $\alpha \leq$ -5% die Haltezeit den Wert 0.5 Sekunden annimmt und
- $\alpha \geq$ 5% die Haltezeit den Wert 1.0 Sekunden annimmt
  Im Zwischenbereich -5% $\leq \alpha \leq$ 5%
- nimmt der Verlauf 100 den konstanten Wert 0.8 Sekunden an,
- stellt der Verlauf 101 eine lineare Funktion des Neigungswinkels dar und
- stellt der Verlauf 102 eine nichtlineare Funktion des Neigungswinkels dar (beispielsweise eine Arcustangens-Funktion).

Ganz analog lässt sich auch die erweiterte Haltezeit behandeln. In Fig. 1 sind dazu die drei Verläufe 110 (= Stufenfunktion), 111 (= lineare Funktion) und 112 (= nichtlineare Funktion) eingezeichnet.

In allen Fällen stellen die in Fig. 1 eingetragenen Zeitwerte natürlich nur Beispielswerte dar.

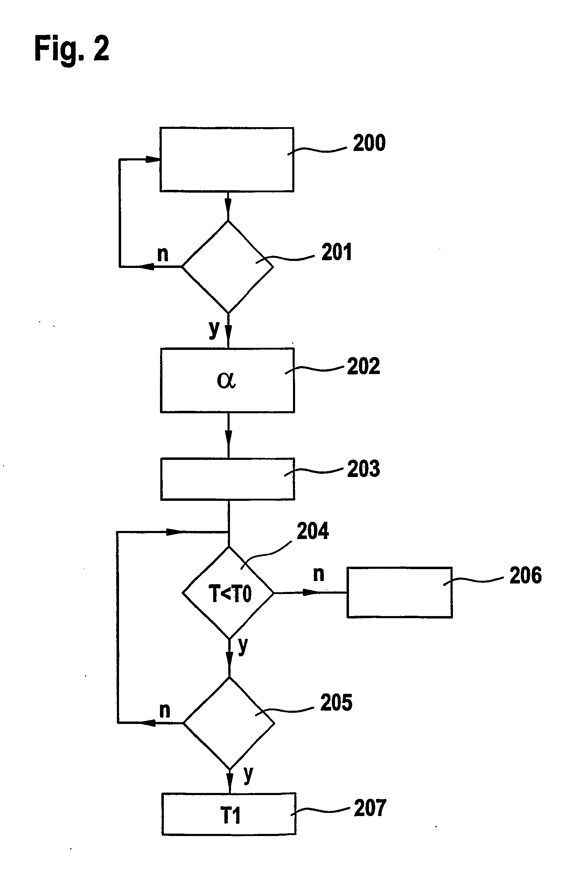

Fig. 2 zeigt den Ablauf des erfindungsgemäßen Verfahrens

Der Start des Verfahrens erfolgt in Block 200. Danach wird in Block 201 festgestellt, ob ein Haltevorgang des Fahrzeugs vorliegt. Lautet die Antwort "Ja" (stets als "y" in Fig. 2 gekennzeichnet), dann wird anschließend in Block 202 der Neigungswinkel $\alpha$ der Fahrbahn ermittelt (die Fahrbahnneigung kann auch aus dem Anhaltevorgang vor dem Stillstand ermittelt werden). Lautet die Antwort in Block 201 dagegen "Nein" (stets als "n" in Fig. 2 gekennzeichnet), dann wird zu Block 200 zurückverzweigt. Anschließend an Block 202 wird nun in Block 203 zur Verhinderung des Wegrollens des Fahrzeugs nach dem Stillstand der Hillholder aktiviert. Der Hillholder hält die fahrerunabhängige Bremskraft maximal während einer Zeitspanne der Länge T0 aufrecht. Dazu wird in Block 204 anschließend abgefragt, ob die bisher abgelaufene Aktivierungszeit T des Hillholders den Maximalwert T0 noch nicht überschritten hat, die Abfrage lautet "T < T0?". Lautet die Antwort "Nein" (d.h. Maximalwert ist überschritten), dann wird in Block 206 der Hillholder deaktiviert. Lautet die Antwort dagegen "Ja", dann wird in Block 205 überprüft, ob der Fahrer einen Anfahrwunsch signalisiert. Lautet die Antwort in Block 205 "Ja", dann wird in Block 207 die noch aufzubringende Haltezeit des Hillholders auf den Wert T1 (d.h. die erweiterte Haltezeit) gesetzt. Lautet die Antwort dagegen "Nein", dann wird zu Block 204 zurückverzweigt und es findet eine erneute Überprüfung statt, ob die Haltezeit T0 bereits abgelaufen ist.

Die Zeitspannen T0 und T1 sind dabei abhängig vom in Block 202 ermittelten Neigungswinkel.

Der Aufbau einer Ausführungsform der erfindungsgemäßen Vorrichtung ist in Fig. 3 dargestellt. Dabei stellt Block 301 den Hillholder dar, welcher die Bremsaktuatoren 305 ansteuert. Der Hillholder empfängt seine Aktivierungssignale (z.B. Fahrzeugstillstand) von den Sensormitteln 300. Weiter empfängt der Hillholder einen Anfahrwunsch des Fahrers repräsentierende Signale von den Sensormitteln 302 sowie den Neigungswinkel der Fahrbahn repräsentierende Signale von den Sensormitteln 303.

**Patentansprüche**

1. Verfahren zur Steuerung der Bremsanlage eines Kraftfahrzeugs,

   - bei dem zur Verhinderung des Wegrollens des Fahrzeugs nach einem Haltevorgang ein erster Bremskraftwert an wenigstens einem Rad des Fahrzeugs fahrerunabhängig eingestellt und während einer vorgegebenen, begrenzten Haltezeit (T0) gehalten wird, wobei
   - der Neigungswinkel ($\alpha$) der Fahrbahn in Fahrzeuglängsrichtung ermittelt wird und
   - dass die Haltezeit (T0) abhängig vom ermittelten Neigungswinkel ($\alpha$) ist,

**dadurch gekennzeichnet, dass**
bei Erfassung eines Anfahrwunsches durch den Fahrer während der vorgegebenen Haltezeit (T0)
- die vorgegebene Haltezeit (T0) vorzeitig abgebrochen wird und
- ein zweiter Bremskraftwert fahrerunabhängig ab diesem Zeitpunkt während einer vorgegebenen erweiterten Haltezeit (T1) aufrechterhalten wird.

2. Verfahren nach Anspruch 1, **dadurch gekennzeichnet,**

- **dass** die erweiterte Haltezeit (T1) abhängig vom ermittelten Neigungswinkel (α) ist.

3. Verfahren nach Anspruch 2, **dadurch gekennzeichnet, dass** die erweiterte Haltezeit (T1) derart abhängig vom ermittelten Neigungswinkel (α) ist,

- dass die erweiterte Haltezeit dann ihren Maximalwert annimmt, wenn der Neigungswinkel (α) einen vorgegebenen positiven Grenzwert überschreitet.

4. Verfahren nach Anspruch 1, **dadurch gekennzeichnet, dass** der Anfahrwunsch des Fahrers durch die Betätigung des Fahrpedals erfasst wird.

5. Verfahren nach Anspruch 1, **dadurch gekennzeichnet, dass** die Haltezeit eine kontinuierliche Funktion des Neigungswinkels (α) ist.

6. Verfahren nach Anspruch 2, **dadurch gekennzeichnet, dass** die erweiterte Haltezeit eine kontinuierliche Funktion des Neigungswinkels (α) ist.

7. Verfahren nach Anspruch 1, **dadurch gekennzeichnet, dass** unter der Vereinbarung, dass der Neigungswinkel (α) bei einem bergabwärts weisenden Anfahrvorgang ein negatives Vorzeichen hat und der Neigungswinkel (α) bei einem bergaufwärts weisenden Anfahrvorgang ein positives Vorzeichen hat, die Haltezeit (T0) mit wachsendem Neigungswinkel (α) entweder konstant bleibt oder anwächst.

8. Verfahren nach Anspruch 2, **dadurch gekennzeichnet, dass** unter der Vereinbarung, dass der Neigungswinkel (α) bei einem bergabwärts weisenden Anfahrvorgang ein negatives Vorzeichen hat und der Neigungswinkel (α) bei einem bergaufwärts weisenden Anfahrvorgang ein positives Vorzeichen hat, die erweiterte Haltezeit (T1) mit wachsendem Neigungswinkel (α) entweder konstant bleibt oder anwächst.

9. Verfahren nach Anspruch 1, **dadurch gekennzeichnet, dass** der erste Bremskraftwert und der zweite Bremskraftwert gleich sind.

10. Vorrichtung zur Steuerung der Bremsanlage eines Kraftfahrzeugs,

- welche Wegrollverhinderungsmittel enthält, mit denen zur Verhinderung des Wegrollens des Fahrzeugs nach einem Haltevorgang ein erster Bremskraftwert an wenigstens einem Rad des Fahrzeugs fahrerunabhängig eingestellt und während einer vorgegebenen, begrenzten Haltezeit (T0) gehalten wird,
wobei weiterhin
- Neigungsermittlungsmittel enthalten sind, mit denen der Neigungswinkel (α) der Fahrbahn in Fahrzeuglängsrichtung ermittelt wird und
- dass die Wegrollverhinderungsmittel so ausgestaltet sind, Haltezeit (T0) abhängig vom ermittelten Neigungswinkel (α) ist,
**dadurch gekennzeichnet, dass**
bei Erfassung eines Anfahrwunsches durch den Fahrer während der vorgegebenen Haltezeit (T0)
- die vorgegebene Haltezeit (T0) vorzeitig abgebrochen wird und
- ein zweiter Bremskraftwert fahrerunabhängig ab diesem Zeitpunkt während einer vorgegebenen erweiterten Haltezeit (T1) aufrechterhalten wird.

**Claims**

1. Method for controlling the brake system of a motor vehicle,

- in which, in order to prevent the vehicle from rolling away after a stopping process, a first braking force value is set at at least one wheel of the vehicle independently of the driver and is held during a predefined, limited stopping time (T0), wherein
- the angle of inclination ($\alpha$) of the carriageway is determined in the longitudinal direction of the vehicle, and
- in that the stopping time (T0) is dependent on the angle of inclination ($\alpha$) which is determined, **characterized in that**,
when a starting request by the driver is detected during the predefined stopping time (T0),
- the predefined stopping time (T0) is aborted prematurely and
- a second braking force value is maintained from this time independently of the driver during a predefined, extended stopping time (T1).

2. Method according to Claim 1, **characterized**

   - **in that** the extended stopping time (T1) is dependent on the angle of inclination ($\alpha$) which is determined.

3. Method according to Claim 2, **characterized in that** the extended stopping time (T1) is dependent on the angle of inclination ($\alpha$) which is determined in such a way

   - that the extended stopping time assumes its maximum value when the angle of inclination ($\alpha$) exceeds a predefined positive limiting value.

4. Method according to Claim 1, **characterized in that** the starting request of the driver is detected by the activation of the accelerator pedal.

5. Method according to Claim 1, **characterized in that** the stopping time is a continuous function of the angle of inclination ($\alpha$).

6. Method according to Claim 2, **characterized in that** the extended stopping time is a continuous function of the angle of inclination ($\alpha$).

7. Method according to Claim 1, **characterized in that** given the stipulation that the angle of inclination ($\alpha$) has a negative sign in the case of a starting process pointing downhill and the angle of inclination ($\alpha$) has a positive sign in the case of a starting process pointing uphill, the stopping time (T0) either remains constant or increases as the angle of inclination ($\alpha$) grows.

8. Method according to Claim 2, **characterized in that** given the stipulation that the angle of inclination ($\alpha$) has a negative sign in the case of a starting process pointing downhill and the angle of inclination ($\alpha$) has a positive sign in the case of a starting process pointing uphill, the extended stopping time (T1) either remains constant or increases as the angle of inclination ($\alpha$) grows.

9. Method according to Claim 1, **characterized in that** the first braking force value and the second braking force value are the same.

10. Device for controlling the brake system of a motor vehicle,

    - which contains rolling-away-prevention means with which, in order to prevent the vehicle from rolling away after a stopping process, a first braking force value is set at at least one wheel of the vehicle independently of the driver and is held during a predefined, limited stopping time (T0) ,
    wherein, in addition
    - angle-determining means are contained with which the angle of inclination ($\alpha$) of the carriageway is determined in the longitudinal direction of the vehicle, and
    - in that the rolling-away-prevention means are configured in such a way that the stopping time (T0) is dependent on the angle of inclination ($\alpha$) which is determined,
    **characterized in that**,
    when a starting request by the driver is detected during the predefined stopping time (T0),
    - the predefined stopping time (T0) is aborted prematurely and
    - a second braking force value is maintained from this time independently of the driver during a predefined, extended stopping time (T1).

**Revendications**

1. Procédé de commande de l'installation de freinage d'un véhicule automobile, dans lequel
   pour empêcher le patinage du véhicule après une opération d'arrêt, une première valeur de force de freinage est établie indépendamment du conducteur sur au moins une roue du véhicule et est maintenue pendant une durée limitée de maintien (T0) prédéterminée,
   l'angle de pente ($\alpha$) de la chaussée dans le sens de la longueur du véhicule est déterminé et
   la durée de maintien (T0) dépendant de l'angle de pente ($\alpha$) est déterminée,
   **caractérisé en ce que**
   lors de la détection d'un souhait de démarrage émis par le conducteur pendant la durée de maintien prédéterminée (T0),
   la durée de maintien prédéterminée (T0) est interrompue précocement et
   une deuxième valeur de force de freinage est maintenue indépendamment du conducteur à partir de cet instant et pendant une durée prolongée et prédéterminée de maintien (T1).

2. Procédé selon la revendication 1, **caractérisé en ce que** la durée de maintien prolongée (T1) dépend de l'angle de pente ($\alpha$) qui a été déterminé.

3. Procédé selon la revendication 2, **caractérisé en ce que** la durée de maintien prolongée (T1) dépend de l'angle de pente ($\alpha$) qui a été déterminé et **en ce que** la durée de maintien prolongée prend sa valeur maximale lorsque l'angle de pente ($\alpha$) dépasse une valeur limite positive prédéterminée.

4. Procédé selon la revendication 1, **caractérisé en ce que** le souhait de démarrage émis par le conducteur est détecté par actionnement de la pédale d'accélération.

5. Procédé selon la revendication 1, **caractérisé en ce que** la durée de maintien est une fonction continue de l'angle de pente ($\alpha$).

6. Procédé selon la revendication 2, **caractérisé en ce que** la durée de maintien prolongée est une fonction continue de l'angle de pente ($\alpha$).

7. Procédé selon la revendication 1, **caractérisé en ce que** si l'angle de pente ($\alpha$) a un signe négatif pendant une opération de démarrage orientée vers le bas ou l'angle de pente ($\alpha$) a une signe positif lors d'une opération de démarrage en montée, la durée de maintien (T0) reste constante ou croît lorsque l'angle de pente ($\alpha$) augmente.

8. Procédé selon la revendication 2, **caractérisé en ce que** si l'angle de pente ($\alpha$) a une signe négatif lors d'une opération de démarrage vers le bas ou l'angle de pente ($\alpha$) a une signe positif lors d'une opération de démarrage en montant, la durée prolongée de maintien (T1) reste constante ou croît lorsque l'angle de pente ($\alpha$) augmente.

9. Procédé selon la revendication 1, **caractérisé en ce que** la première valeur de force de freinage et la deuxième valeur de force de freinage sont identiques.

10. Dispositif de commande de l'installation de freinage d'un véhicule automobile, comprenant
    un moyen anti-patinage par lequel, pour empêcher le patinage du véhicule après une opération d'arrêt, une première valeur de force de freinage est établie indépendamment du conducteur sur au moins une roue du véhicule et est maintenue pendant une durée limitée et prédéterminée de maintien (T0), et de plus
    des moyens de détermination de la pente qui déterminent l'angle de pente ($\alpha$) de la chaussée dans le sens de la longueur du véhicule et
    les moyens anti-patinage étant configurés de telle sorte que la durée de maintien (T0) dépend de l'angle de pente ($\alpha$) qui a été déterminé,
    **caractérisé en ce que**
    lorsqu'un souhait de démarrage émis par le conducteur est détecté pendant la durée prédéterminée de maintien (T0), la durée prédéterminée de maintien (T0) est interrompue précocement et
    une deuxième valeur de force de freinage est maintenue indépendamment du conducteur et à partir de cet instant pendant une durée prolongée et prédéterminée de maintien (T1).

# Fig. 1

EP 1 560 737 B1

# Fig. 2

# Fig. 3

300  301  305

302  303

# Fig. 4

α > 0  α < 0

# Fig. 5

$\alpha > 0$        $\alpha < 0$

# Fig. 6

20%

20m

100m

EP 1 560 737 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19950034 A1

- JP 59143474 B